# EUROPÄISCHE PATENTSCHRIFT

(11) **EP 2 338 584 B1**
(45) Veröffentlichungstag und Bekanntmachung des Hinweises auf die Patenterteilung: **06.07.2016**
(21) Anmeldenummer: 10013922.9
(22) Anmeldetag: 25.10.2010
(51) Int. Cl.: B01D 53/94, F01N 3/08, F01N 3/10, F01N 3/022, F01N 3/031, F01N 13/00

(54) **ABGASREINIGUNG BEI OTTOMOTOREN UNTER VERWENDUNG EINES ADSORBERS MIT PARTIKELFILTERFUNKTION**
CLEANING THE EXHAUST GAS OF PETROL ENGINES USING AN ADSORBER WITH PARTICULATE FILTER FUNCTION
NETTOYAGE DE GAZ D'ÉCHAPPEMENT DANS DES MOTEURS À ESSENCE EN UTILISANT UN ADSORBEUR DOTÉ D'UNE FONCTION DE FILTRE À PARTICULES

(30) Priorität: 23.12.2009 DE 102009060289
(43) Veröffentlichungstag der Anmeldung: 29.06.2011
(73) Patentinhaber: Volkswagen Aktiengesellschaft, 38440 Wolfsburg (DE)
(72) Erfinder: Seiler, Valeri, 29399 Wahrenholz (DE); Degen, Alf, 38536 Meinersen (DE)

(56) Entgegenhaltungen:
- EP-A1- 0 667 445
- EP-A1- 2 090 352
- WO-A1-2005/113953
- WO-A1-2009/103699
- US-A- 5 492 679

## Beschreibung

Die Erfindung betrifft eine Abgasreinigungsanlage eines Ottomotors mit einem Adsorber mit Partikelfilterfunktion, deren Verwendung, sowie ein Verfahren zur Reinigung von Abgas eines Ottomotors.

Zur katalytischen Abgasreinigung bei Ottomotoren werden üblicherweise Dreiwegekatalysatoren eingesetzt, mit denen im Abgas enthaltenes Kohlenmonoxid, Stickoxide und Kohlenwasserstoffe zu unschädlichen Verbindungen umgesetzt werden. Ferner enthält das Abgas von Ottomotoren und insbesondere von Ottomotoren mit direkter Einspritzung bedingt durch das inhomogene Kraftstoff-/Luftgemisch Verbrennungsrückstände in Partikelform, die überwiegend aus Ruß bestehen. Aber auch Ottomotoren, die homogen betrieben werden, weisen Partikelemissionen auf, jedoch nicht im gesamten Betriebskennfeld, sondern überwiegend im Kaltstart während die Lambdasonden-Regelung noch nicht aktiv ist.
Die Abgasgrenzwerte für Ottomotoren unterliegen einer stetigen Anpassung an die technischen Möglichkeiten der Abgasreinigung bzw. treiben diese voran. So soll mit der Euro6-Norm ein Partikel-Anzahl-Grenzwert (PN) bei existierendem niedrigen NMHC-Grenzwert (non methane hydrocarbons) eingeführt werden, während in den USA Planungen bestehen, den Flottenmittelwert von ULEV (Ultra Low Emissions Vehicle) auf SULEV (Super Ultra Low Emissions Vehicle) zu senken, wobei zudem Grenzwerte für Sub-SULEV, die einer Halbierung der Grenzwerte für SULEV entsprechen, diskutiert werden.

Weiterhin kann neben der Verschärfung der Grenzwerte für gasförmige Abgasbestandteile auch eine deutliche Reduzierung der Grenzwerte für Partikel, nämlich für Partikel-Masse (PM) und Partikel-Anzahl (PN) erfolgen.

Die Einhaltung der kommenden Grenzwerte für Partikel ist nach derzeitigem Stand der Technik über die gesamte Fahrzeuglebensdauer bei Ottomotoren nicht sichergestellt, so dass ein Bedarf an alternativen Abgasnachbehandlungssystemen gegeben sein wird.

In der EP 2042225 A1 wird daher zur Entfernung von Partikeln aus dem Abgas von mit überwiegend stöchiometrischen Luft/Kraftstoffgemisch u.a. ein katalytisch aktives Partikelfilter vorgeschlagen, das geeignet ist, neben den gasförmigen Schadstoffen Kohlenmonoxid (CO), Kohlenwasserstoffe (HC) und Stickoxide (NOₓ) auch Partikel aus dem Abgas zu entfernen. Dieser Partikelfilter weist einen Filterkörper und eine zweilagige Beschichtung auf, die neben weiteren Bestandteilen Palladium enthält. Da edelmetallhaltige Beschichtungen einer Alterung durch Sintern unterliegen, ist nachteilhafterweise eine ausreichende, d. h. eine die neuen Grenzwerte erfüllende Funktion des katalytisch aktiven Partikelfilters über die gesamte Fahrzeuglebensdauer nicht gewährleistet.

In der EP 667 445 A1 wird eine Abgasreinigungsanlage beschrieben, die einen Adsorber bzw. einen Wandstromfilter aufweist, dem ein Katalysator nachgeschaltet ist. Der Adsorber ist ausgangsseitig mit einer edelmetallhaltigen, katalytisch wirksamen Beschichtung versehen. Der Träger des Adsorbers besteht aus Keramik und kann zudem mit Zeolith beschichtet sein.

Auch in der US 5,492,679 wird ein aus einem keramischen Träger bestehender Adsorber in Form eines Wandstromfilters mit Zeolith-Beschichtung und einer ausgangsseitigen edelmetallhaltigen Beschichtung offenbart.

WO 2005/113953 A1 beschreibt einen Dieselpartikelfilter, der mit einer adsorbierenden und einer oxidierenden Beschichtung versehen ist. Der Grundkörper kann keramischer Natur sein und die Beschichtungen können wohl aus entsprechend modifizierten Zeolithen bestehen. Der Offenbarungsgehalt dieser Druckschrift ist diesbezüglich unklar.

WO 2009/103699 A1 zeigt wiederum einen Wandstromfilter mit einem keramischen Träger für die Reinigung von Abgasen eines Dieselmotors, der neben einer Zeolith-Beschichtung eingangsseitig über einen Edelmetallkatalysator verfügt.

Des Weiteren ist im Dokument EP 2 090 352 A1 eine Vorrichtung zur Verminderung von Dibenzo-Dioxin- und Dibenzo-Furan-Emissionen aus übergangsmetallhaltigen Katalysatoren (PCDD-/PCDF-Zersetzungskatalysatoren) bekannt, wobei titandioxidgetragenes und wolframoxidstabilisiertes Vanadiumpentoxid (V₂O₅/WO₃/TiO₂) zum Einsatz gelangt. Das Vanadiumpentoxid kann in eine Zeolithstruktur eingebettet sein, so dass sich die Sublimationstemperaturen aufgrund der hohen Dampfdrücke innerhalb der Porenstruktur erheblich erhöhen, wodurch ein Einsatz selbst bis zu 750° Celsius möglich ist. Es wird auch in diesem Dokument angesprochen, dass Zeolithe für die Herstellung von übergangsmetallhaltigen SCR-Katalysatoren eingesetzt werden können, wobei ein derartiger Katalysator eine bauliche Einheit mit dem PCDD-/PCDF-Zerlegungskatalysator bilden kann. Konkret kann eine Ausführungsform ein Partikelfilter sein, der gleichzeitig die entsprechende Katalysatorbeschichtung trägt.

Der Erfindung liegt die Aufgabe zugrunde, eine Abgasreinigungsanlage mit einem Adsorber mit einer Partikelfilterfunktion und ein Verfahren zur Reinigung der Abgase von Ottomotoren zu schaffen, die gasförmige und feste Bestandteile aus dem Abgas von Ottomotoren entfernen, wobei eine Lebensdauer des Adsorbers über die gesamte Fahrzeuglebensdauer gewährleistet sein soll.

Die Aufgabe wird durch eine Abgasreinigungsanlage eines Ottomotors mit einem Adsorber mit Partikelfilterfunktion, eine Verwendung der Abgasreinigungsanlage mit Adsorber, und ein Verfahren zur Abgasreinigung mit den Merkmalen der Ansprüche 1, 4 bzw. 5 gelöst.

Es ist erfindungsgemäß eine Abgasreinigungsanlage eines Ottomotors mit einem Adsorber mit Partikelfilterfunktion vorgesehen. Der Adsorber weist eingangseitig und ausgangsseitig jeweils zumindest einen Kanal auf, wobei die eingangsseitigen und ausgangsseitigen Kanäle durch einen porösen keramischen Träger voneinander getrennt sind, so dass das Abgas durch diesen Träger strömen muss. Zudem ist der keramische Träger eingangsseitig und ausgangsseitig mit einer Beschichtung aus Zeolith versehen.

Der keramische Träger bietet eine Partikelrückhaltefunktion und durch die Zeolith-Beschichtung ist eine Adsorberfunktion für gasförmige Abgasbestandteile gegeben.

Je nach Beladungszustand werden die Partikel nicht nur im Träger, sondern auch auf der Kanaloberfläche abgeschieden.

Die Beschichtung kann die adsorbierten Kohlenwasserstoffe und Stickoxide in einem bestimmten Temperaturbereich kurzzeitig speichern. Wird der Adsorber durch das Abgas erwärmt, so beginnt bei 100 - 120 °C die Desorption der gasförmigen Bestandteile, die bei 300 °C vollständig erfolgt ist. Die desorbierten Bestandteile werden anschließend von einem nachgeordneten Dreiwegekatalysator konvertiert. Durch die Zwischenspeicherung der gasförmigen Bestandteile im Adsorber gelangen die gasförmigen Bestandteile erst mit einer zeitlichen Verzögerung in den Dreiwegekatalysator, so dass dieser nach einem Kaltstart, die zur Konvertierung erforderliche Betriebstemperatur aufweist. Dadurch steht für den nachgeschalteten 3-Wege-Katalysator mehr Zeit für eine Erwärmung auf die Anspringtemperatur zur Verfügung so dass die aus dem Zeolith desorbierten Kohlenwasserstoffe sowie die übrigen gasförmigen Schadstoffkomponenten effizient konvertiert werden. Da sich die Zeolith-Beschichtung im ausgangsseitigen Kanal langsamer erwärmt als im eingangsseitigen Kanal, werden die durchgeschlüpften oder bereits desorbierten Kohlenwasserstoffe bzw. gasförmigen Abgasbestandteile im Zeolith des ausgangsseitigen Kanals erneut adsorbiert, wodurch dem Dreiwegekatalysator eine längere Zeit zur Erwärmung zur Verfügung steht.

Ein Abbrand der im Adsorber gespeicherten kohlenstoffhaltigen Partikel erfolgt in üblicher Weise thermisch oder mittels NO₂ bzw. des CRT-Effekts.

Erfindungsgemäß wird somit eine Abgasreinigungsanlage mit einem Adsorber mit Partikelfilterfunktion zur temporären Zwischenspeicherung von gasförmigen Abgasbestandteilen, nämlich Kohlenwasserstoffen und Stickoxiden eines Ottomotors verwendet.

Die Kombination der erfindungsgemäßen Abgasreinigungsanlage mit Adsorber mit Filterfunktion mit einem Dreiwegekatalysator reduziert die relevanten Bestandteile des Abgases soweit, dass die eingangs beschriebenen neuen Gesetzesanforderungen erfüllt werden. Da der Adsorber nicht mit Edelmetall beschichtet ist, zeigt die Beschichtung des Adsorbers keine Alterung über die gesamte Fahrzeuglebensdauer.

Eine erfindungsgemäß gestaltete Abgasreinigungsanlage eines Ottomotors weist dementsprechend einen vorgenannten, edelmetallfreien Adsorber mit Partikelfilterfunktion sowie einen nachgeordneten Dreiwegekatalysator auf.

Der Adsorber kann dauerhaft im Abgasstrom angeordnet sein, wie bei Direkteinspritzer-Ottomotoren mit inhomogenen Kraftstoff-/Luftgemisch, oder mittels eines Bypasssystems lediglich bis zum Erreichen der Betriebstemperatur des Dreiwegekatalysators, wie bei homogen betriebenen Ottomotoren mit Lambda =1. Somit ist bei letzter Variante der Gegendruck des

Abgases nur kurz im Kaltstart bei sehr geringen Abgasvolumenströmen vorhanden. Hingegen kann bei erstgenannter Variante eine Abgasklappe eingespart werden, die wegen einer möglichen Fehlfunktion überwacht werden müsste.

Das entsprechende Verfahren zur Reinigung von Abgas eines Ottomotors mit einer Abgasreinigungsanlage mit einem Adsober mit Partikelfilterfunktion ist dadurch gekennzeichnet, dass das Abgas zur Entfernung von Kohlenwasserstoffen (HC), Stickoxiden (NOₓ) und Partikeln über den erfindungsgemäßen Adsorber und anschließend über einen Dreiwegekatalysator geleitet wird, wobei nach Erreichen einer definierten Temperatur des Dreiwegekatalysators der Adsorber, wie oben ausgeführt, nicht mehr mit Abgas beaufschlagt werden muss.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: in einer schematischen Darstellung ein Ottomotor mit Abgasreinigungssystem, und.
- Figur 2: in einer geschnittenen Detailansicht den Adsorber einer erfindungsgemäßen Abgasreinigungsanlage.

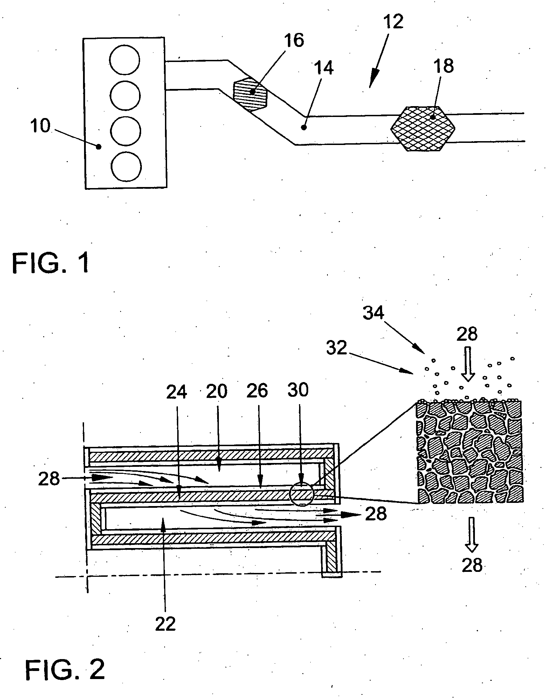

Figur 1 zeigt einen Ottomotor 10, an dem ein Abgasreinigungssystem 12 angeordnet ist. Ein Abgasreinigungssystem 12 umfasst naturgemäß noch zahlreiche weitere Einrichtungen zur Steuerung und dergleichen, die hier nicht dargestellt sind. Das Abgasreinigungssystem 12 weist einen Abgaskanal 14 auf, in dem sich ein Adsorber 16 befindet, dem ein Dreiwegekatalysator 18 nachgeordnet ist.

In Figur 2 ist der Adsorber 16 einer erfindungsgemäßen Abgasreinigungsanlage mit einem eingangsseitigen Kanal 20 und einem ausgangsseitigen Kanal 22 dargestellt, die durch einen porösen keramischen Träger 24 voneinander getrennt sind. Die Oberfläche der Kanäle 20, 22 sind mit einer Beschichtung 26 aus Zeolith versehen. Das Abgas 28 strömt in den eingangsseitigen Kanal 20 ein und durchdringt die Beschichtung 26 sowie den Träger 24. Anschließend tritt das Abgas 28 in dem ausgangsseitigen Kanal 22 wieder aus und wird dem Dreiwegekatalysator 18 zugeführt. In dem vergrößerten Ausschnitt 30 des Trägers 24 mit Beschichtung 26 ist sichtbar, wie die Partikel 32 und gasförmigen Bestandteile 34 sich an der Oberfläche des eingangsseitigen Kanals 20 und im porösen Träger 24 anlagern.

### Bezugszeichenliste

- 10: Ottomotor
- 12: Abgasreinigungssystem
- 14: Abgaskanal
- 16: Adsorber
- 18: Dreiwegekatalysator
- 20: eingangsseitiger Kanal
- 22: ausgangsseitiger Kanal
- 24: keramischer Träger
- 26: Beschichtung
- 28: Abgas
- 30: Ausschnitt
- 32: Partikel
- 34: gasförmige Bestandteile

## Patentansprüche

1. Abgasreinigungsanlage eines Ottomotors mit einem Adsorber mit Partikelfilterfunktion, **dadurch gekennzeichnet, dass** der edelmetallfreie Adsorber (16) eingangsseitig und ausgangsseitig über jeweils zumindest einen Kanal verfügt, die durch einen porösen keramischen Träger (24) voneinander getrennt sind, so dass das Abgas durch diesen Träger strömen muss, und dass der keramische Träger (24) eingangsseitig und ausgangsseitig mit einer Beschichtung (26) aus Zeolith versehen ist.

2. Abgasreinigungsanlage nach Anspruch 1, **dadurch gekennzeichnet, dass** dem Adsorber (16) ein Dreiwegekatalysator (18) nachgeordnet ist.

3. Abgasreinigungsanlage nach Anspruch 1 oder 2, **dadurch gekennzeichnet, dass** der Adsorber (16) in einem Bypass des Abgasreinigungssystems (12) angeordnet ist.

4. Verwendung einer Abgasreinigungsanlage mit einem Adsorber mit Partikelfilterfunktion nach Anspruch 1 zur temporären Zwischenspeicherung von gasförmigen Abgasbestandteilen (34) eines Ottomotors (10), nämlich von Kohlenwasserstoffen (HC) und/oder Stickoxiden (NOₓ).

5. Verfahren zur Reinigung von Abgas eines Ottomotors mit einer Abgasreinigungsanlage, mit einem Adsorber mit Partikelfilterfunktion, **dadurch gekennzeichnet, dass** das Abgas zur Entfernung von Kohlenwasserstoffen (HC), Stickoxiden (NOₓ) und Partikeln über einen Adsorber mit Partikelfilterfunktion (16) einer Abgasreinigungsanlage nach Anspruch 1 und anschließend über einen Dreiwegekatalysator (18) geleitet wird.

6. Verfahren zur Reinigung von Abgas eines Ottomotors nach Anspruch 5, **dadurch gekennzeichnet, dass** das Abgas (28) nur bis Erreichen einer definierten Temperatur des Dreiwegekatalysators (18) über den Adsorber (16) geleitet wird.

## Claims

1. Exhaust-gas purification system of an Otto-cycle engine having an adsorber with particle filter function, **characterized in that** the absorber (16), which is free from noble metals, has in each case at least one duct at the inlet side and at the outlet side, said ducts being separated from one another by a porous ceramic substrate (24) such that the exhaust gas must flow through said substrate, and **in that** the ceramic substrate (24) is, at the inlet side and at the outlet side, provided with a coating (26) composed of zeolite.

2. Exhaust-gas purification system according to Claim 1, **characterized in that** a three-way catalytic converter (18) is positioned downstream of the adsorber (16).

3. Exhaust-gas purification system according to Claim 1 or 2, **characterized in that** the adsorber (16) is arranged in a bypass of the exhaust-gas purification system (12).

4. Use of an exhaust-gas purification system having an adsorber with particle filter function according to Claim 1 for the temporary intermediate storage of gaseous exhaust-gas constituents (34) of an Otto-cycle engine (10), specifically of hydrocarbons (HC) and/or nitrogen oxides (NOₓ).

5. Method for the purification of exhaust gas of an Otto-cycle engine having an exhaust-gas purification system having an adsorber with particle filter function, **characterized in that**, for the removal of hydrocarbons (HC), nitrogen oxides (NOₓ) and particles, the exhaust gas is conducted via an adsorber with particle filter function (16) of an exhaust-gas purification system according to Claim 1 and subsequently via a three-way catalytic converter (18).

6. Method for the purification of exhaust gas of an Otto-cycle engine according to Claim 5, **characterized in that** the exhaust gas (28) is conducted via the adsorber (16) only until a defined temperature of the three-way catalytic converter (18) is attained.

## Revendications

1. Installation de purification de gaz d'échappement d'un moteur à allumage par étincelle, comprenant un adsorbeur avec une fonction de filtre à particules, **caractérisée en ce que** l'adsorbeur exempt de métaux précieux (16) dispose, du côté de l'entrée et du côté de la sortie, à chaque fois d'au moins un conduit, lesdits conduits étant séparés les uns des autres par un support en céramique poreux (24) de telle sorte que les gaz d'échappement doivent s'écouler à travers ce support et **en ce que** le support en céramique (24) est pourvu du côté de l'entrée et du côté de la sortie d'un revêtement (26) en zéolithe.

2. Installation de purification de gaz d'échappement selon la revendication 1, **caractérisée en ce qu'**un catalyseur à trois voies (18) est monté en aval de l'adsorbeur (16).

3. Installation de purification de gaz d'échappement selon la revendication 1 ou 2, **caractérisée en ce que** l'adsorbeur (16) est disposé dans une dérivation du système de purification de gaz d'échappement (12).

4. Utilisation d'une installation de purification de gaz d'échappement comprenant un adsorbeur avec une fonction de filtre à particules selon la revendication 1, pour le stockage intermédiaire temporaire de constituants gazeux des gaz d'échappement (34) d'un moteur à allumage par étincelle (10), à savoir d'hydrocarbures (HC) et/ou d'oxydes d'azote (NOx).

5. Procédé de purification de gaz d'échappement d'un moteur à allumage par étincelle comprenant une installation de purification des gaz d'échappement, comprenant un adsorbeur avec une fonction de filtre à particules, **caractérisé en ce que** les gaz d'échappement, pour l'élimination des hydrocarbures (HC), des oxydes d'azote (NOx) et des particules, sont guidés sur un adsorbeur avec une fonction de filtre à particules (16) d'une installation de purification de gaz d'échappement selon la revendication 1 et ensuite sur un catalyseur à trois voies (18).

6. Procédé de purification de gaz d'échappement d'un moteur à allumage par étincelle selon la revendication 5, **caractérisé en ce que** le gaz d'échappement (28) est guidé sur l'adsorbeur (16) seulement jusqu'à ce que le catalyseur à trois voies (18) a atteint une température définie.
